# EUROPÄISCHE PATENTSCHRIFT

(11) **EP 1 684 998 B1**
(45) Veröffentlichungstag und Bekanntmachung des Hinweises auf die Patenterteilung: **25.03.2009**
(21) Anmeldenummer: 04763882.0
(22) Anmeldetag: 06.08.2004
(51) Int. Cl.: B60H 1/32, B60H 1/00

(54) **KÄLTEMITTEL-KREISLAUF FÜR EINE KRAFTFAHRZEUG-KLIMAANLAGE, KRAFTFAHRZEUG-KLIMAANLAGE UND VERFAHREN ZUM BETREIBEN EINER SOLCHEN**
COOLANT CIRCUIT FOR THE AIR CONDITIONING SYSTEM OF A MOTOR VEHICLE, MOTOR VEHICLE AIR CONDITIONING SYSTEM AND METHOD FOR OPERATING SAID SYSTEM
CIRCUIT DE REFRIGERANT D'UNE INSTALLATION DE CLIMATISATION D'UN VEHICULE AUTOMOBILE, INSTALLATION DE CLIMATISATION D'UN VEHICULE AUTOMOBILE ET SON MODE DE FONCTIONNEMENT

(30) Priorität: 10.09.2003 DE 10342110
(43) Veröffentlichungstag der Anmeldung: 02.08.2006
(73) Patentinhaber: Behr GmbH & Co. KG, 70469 Stuttgart (DE)
(72) Erfinder: BEN-SALHA, Mourad, 70372 Stuttgart (DE); BUREAU, Cathy, 48009 Birmingham, MI (US); DÜRR, Gottfried, 70437 Stuttgart (DE); FEUERECKER, Günther, 70567 Stuttgart (DE); KUNBERGER, Ottokar, 70825 Korntal-Münchingen (DE); STRAUSS, Thomas, 73274 Notzingen (DE); WALTER, Christoph, 70469 Stuttgart (DE)
(86) Internationale Anmeldenummer: PCT/EP2004/008852
(87) Internationale Veröffentlichungsnummer: WO 2005/028225

(56) Entgegenhaltungen:
- WO-A-20/04054827
- DE-A- 10 156 944
- US-A1- 2003 159 455
- US-B2- 6 430 947

## Beschreibung

Die Erfindung betrifft einen Kältemittel-Kreislauf für eine Kraftfahrzeug-Klimaanlage mit einem Idie-stop-Betrieb gemäß dem Oberbegriff des Anspruchs 1.

Eine Klimaanlage mit einem derartigen Kältemittel-Kreislauf wird insbesondere in einem Kraftfahrzeug eingesetzt. Der Kältemittelfluss wird hierbei üblicherweise von einem in den Kältemittel-Kreislauf geschalteten Kompressor erzeugt, welcher unmittelbar vom Kraftfahr-zeug-Motor angetrieben wird. Der Kältemittelfluss kommt somit zum Erliegen, sobald der Kraftfahrzeug-Motor abgeschaltet wird. Entsprechend ist eine herkömmliche Kraftfahrzeug-Klimaanlage auch nur bei laufendem Kraftfahrzeug-Motor funktionstüchtig. Dies ist insbesondere problematisch bei einer Klimaanlage, die zum Einsatz in einem besonders verbrauchsarmen Kraftfahrzeug vorgesehen ist. Zur Reduzierung des Kraftstoffverbrauchs ist bei einem solchen Kraftfahrzeug ein so genannter ldle-stop-Betrieb üblich. Darunter wird ein Betrieb des Kraftfahrzeugs verstanden, bei dem der Motor bei vorübergehendem Stillstand des Kraftfahrzeugs, beispielsweise beim Halten an einer Ampel, vorübergehend abgeschaltet wird. Eine für ein solches Kraftfahrzeug geeignete Klimaanlage muss in der Lage sein, den Fahrzeuginnenraum auch dann zu klimatisieren, wenn der Motor vorübergehend abgeschaltet ist.

Bei einer aus der DE 101 56 944 A1 bekannten Vorrichtung ist zur Überwindung dieses Problems ein zweigeteilter Verdampfer vorgesehen. Dieser Verdampfer umfasst zusätzlich zu einem herkömmlichen Verdampfersegment ein weiteres, sogenanntes Speicherverdampfersegment, das ein bei Raumtemperatur flüssiges Kältespeichermedium enthält. Das Speicherverdampfersegment dient einerseits wie ein herkömmlicher Kältemittelverdampfer zur direkten Kühlung der durchströmenden Luft durch das verdampfende Kältemittel. Andererseits wird im Normalbetrieb des Kraftfahrzeugs, also bei laufendem Motor, ein Teil der Kälteleistung herangezogen, um das Kältespeichermedium einzufrieren und somit "Kälte" zu speichern. Die gespeicherte Kälte wird im Idle-Stop-Betrieb, also bei vorübergehend ausgeschaltetem Motor, zur weiteren Kühlung des Luftstroms herangezogen. Hierbei wird der durch den Verdampfer strömenden Luft durch das wieder auftauende Kältespeichermedium Wärme entzogen. Zur Optimierung der Betriebseigenschaften dieser Klimaanlage ist eine dem Verdampfer vorgeschaltete Luftklappe vorgesehen, mit der wahlweise das Verdampfersegment oder das Speicherverdampfersegment des Verdampfers für den Luftstrom abgesperrt werden können. In einem Belademodus ist hierbei bei laufendem Motor das Speicherverdampfersegment abgesperrt, so dass dort die volle Kühlleistung zum Einfrieren des Kältespeichermediums zur Verfügung steht. Der Luftstrom wird während dieser Zeit durch das Verdampfersegment geleitet. Während des Idle-Stop-Betriebs wird die Klimaanlage hingegen in einem Entladezustand betrieben, in welchem das Verdampfersegment für den Luftstrom abgesperrt ist, und dieser zur Rückgewinnung der gespeicherten "Kälte" durch das Speicherverdampfersegment geleitet wird.

Bei einer alternativen, aus der EP 0 995 621 A2 bekannten Lösung wird vorgeschlagen, den Verdampfer durch kondensierende Luftfeuchtigkeit zu vereisen und damit eine Art Eisspeicher zu erzeugen. Im Idle-Stop-Betrieb wird die Luft dann durch das tauende Eis abgekühlt. Die Verwendung von kondensierter Luftfeuchtigkeit als Kältespeichermedium ist insofern ungünstig, als der Verdampfer aufgrund des niedrigen Taupunkts von Wasser eine vergleichsweise hohe Kühlleistung aufweisen muss, damit überhaupt eine nennenswerte Kondensation und Eisbildung stattfindet. Weiterhin hängt die Speichereigenschaft des bekannten Verdampfers von der Luftfeuchtigkeit der Umgebungsluft ab. Bei "ungünstigen", d.h. trockenen Klimabedingungen ist damit zu rechnen, dass nicht genug Wasser für eine effektive Kältespeicherung anfällt. Schließlich führt eine Vereisung des Verdampfers in unerwünschter Weise zu einer Erhöhung des Strömungswiderstandes der Klimaanlage.

Weiterhin ist die Druckschrift US 6430947 bekannt geworden, welche eine mobile Klimaanlage und eine Steuervorrichtung hierfür offenbart.

Der Erfindung liegt die Aufgabe zu Grunde, einen Kältemittel-Kreislauf einer derartigen Klimaanlage zu verbessern.

Diese Aufgabe wird gelöst durch einen Kältemittel-Kreislauf mit den Merkmalen des Anspruches 1. Vorteilhafte Ausgestaltungen sind Gegenstand der Unteransprüche.

Die Erfindung bezieht sich auf einen Kältemittel-Kreislauf für eine Kraftfahrzeug-Klimaanlage mit einem vom Kraftfahrzeug-Motor angetriebenen Kompressor, der bei einem Motorstopp steht, wobei die Klimaanlage im Falle eines Idle-stop-Betriebs noch eine ausreichende Kälteleistung zum Kühlen des Fahrzeuginnenraums zur Verfügung stellen kann. Dabei wird das Problem des durch die anhaltende Verdampfung des Kältemittels im Verdampfer ansteigenden Drucks durch das Vorsehen mindestens eines Kältemittelsammlers wobei zwei Kältemittelsammler vorgesehen sind, welcher als Druckabsenkungsvorrichtung dient, gelöst, in dem sich gasförmiges Kältemittel sammelt und kondensiert, so dass sich das Volumen verringert und dadurch der Druck absinkt.

Da die Verdampfung im Verdampfer auch bei einem Motorstopp weiterhin stattfindet, ohne dass der Druck ansteigt, wird das Temperaturniveau einigermaßen aufrecht erhalten und der Taupunkt von Wasser nicht erreicht, so dass das im Verdampfer gesammelte Wasser nicht verdunstet und kein Feuchtigkeitsanstieg im Fahrzeuginnenraum stattfindet.

Als Druckabsenkungsvorrichtung wirkende Kältemittelsammler können zwischen Kondensator und Kompressor angeordnet sein, ohne dass in der Regel der Verdampfer geändert werden muss.

Für den Idle-stop-Betrieb sind für eine Aufrechterhaltung der Ausblastemperatur in den Fahrzeuginnenraum keine zusätzlichen Kältespeicher im Verdampfer zur Kühlung des Luftstroms erforderlich, so dass der Verdampfer nicht vergrößert werden muss und auch der Druckabfall des Luftstroms nicht erhöht wird.

Bevorzugt ist die Druckabsenkungsvorrichtung, das heißt insbesondere mindestens ein Kältemittelsammler, direkt vor und/oder direkt nach dem Verdampfer angeordnet und/oder besonders bevorzugt direkt in den Verdampfer integriert ausgebildet. Hierbei sind zwei Kältemittelsammler vorgesehen.

Zur Erhöhung der Kondensation von Kältemittel im Kältemittelsammler ist bevorzugt ein Kältespeicher vorgesehen. Dieser kann um den Kältemittelsammler herum angeordnet sein, sich aber auch im Innenraum desselben befinden oder um eine Leitung des Kältemittel-Kreislauf herum angeordnet sein. Der Kältespeicher wird bevorzugt durch Metallelemente und/oder mit einem Kältespeichermedium gefüllte Elemente gebildet.

Gemäß einer bevorzugten Ausführungsform ist der Kältespeicher verschiebbar im Kältemittelsammler angeordnet, wobei er, wenn der Kältemittelsammler Kältemittel aufnehmen soll, im oberen Bereich des Kältemittelsammlers, oberhalb des flüssigen Kältemittels, angeordnet ist, und zum Beladen des Kältespeichers im unteren Bereich des Kältemittelsammlers, eingetaucht in das flüssige Kältemittel angeordnet ist.

Alternativ kann der Kältespeicher auch zum Beladen desselben in Kontakt mit der Saugleitung des Kompressors sein und zum Kühlen des Kältemittelsammlers in Kontakt mit demselben sein.

Bevorzugt ist zwischen dem Expansionsorgan und dem Verdampfer ein Phasentrenner, insbesondere ein Zyklon-Abscheider, vorgesehen, der flüssiges und gasförmiges Kältemittel trennt und flüssiges Kältemittel direkt einem Kältemittelsammler zuführt, wobei insbesondere der Kältemittelsammler durch ein erstes Segment des mehrteilig ausgebildeten Verdampfers gebildet wird. Gasförmiges und/oder flüssiges Kältemittel wird direkt dem zweiten Segment oder dem nachfolgenden Segmenten zugeführt.

Gemäß einer alternativen Ausführungsform ist ein Bypass zwischen dem Einlass des Verdampfers und dem zweiten Segment des Verdampfers vorgesehen, durch den zum Beladen des Verdampfers gasförmiges Kältemittel am ersten Verdampfer-Segment vorbeigeführt werden kann. Im Bypass kann ein Absperr-Ventil angeordnet sein.

Im Folgenden wird die Erfindung anhand mehrerer Ausführungsbeispiele mit Abwandlungen unter Bezugnahme auf die Zeichnung im Einzelnen erläutert. In der Zeichnung zeigen:
- Fig. 1: einen schematisch dargestellten Kältemittel-Kreislauf einer erfindungsgemäßen Klimaanlage gemäß einem ersten Ausführungsbeispiel. Dieses erste Ausführungsbeispiel wird nicht beansprucht und nacht somit Keinen Teil der Erfindung aus.
- Fig. 2: eine Abwandlung des Kältemittel-Kreislaufs von Fig. 1,
- Fig. 3: eine weitere Abwandlung des Kältemittel-Kreislaufs von Fig. 1,
- Fig. 4a, 4b: einen Kältemittelsammler, wie er gemäß einer Ausführungsform der Erfindung verwendet wird, wobei in Fig. 4a ein Schnitt in Längsachse und in Fig. 4b der Querschnitt des Kältemittelsammlers dargestellt ist,
- Fig. 5a, 5b: einen alternativen Kältemittelsammler in zwei unterschiedlichen Betriebszuständen,
- Fig. 6a, 6b: eine erste Ausführungsform eines Kältespeichers, wie er in einem Kältemittelsammler verwendet werden kann,
- Fig. 6c, 6d: eine zweite Ausführungsform eines Kältespeichers, wie er in einem Kältemittelsammler verwendet werden kann,
- Fig. 6e-g: eine dritte Ausführungsform eines Kältespeichers, wie er in einem Kältemittelsammler verwendet werden kann,
- Fig. 7a-c: einen Kältemittelsammler mit verschiebbarem Kältespeicher in verschiedenen Stellungen, wobei in Fig. 7c eine Draufsicht dargestellt ist,
- Fig. 8: einen schematisch dargestellten Kältemittel-Kreislauf einer erfindungsgemäßen Klimaanlage gemäß einem zweiten Ausführungsbeispiel,
- Fig. 9: eine Abwandlung des Kältemittel-Kreislaufs von Fig. 8,
- Fig. 10: eine weitere Abwandlung des Kältemittel-Kreislaufs von Fig. 8,
- Fig. 11a: eine weitere Abwandlung des Kältemittel-Kreislaufs von Fig. 8 mit einem Kältemittelsammler mit verschiebbarem Kältespeicher,
- Fig. 11b: einen Schnitt durch den Kältemittelsammler von Fig. 11a,
- Fig. 12a: einen schematisch dargestellten Kältemittel-Kreislauf einer erfindungsgemäßen Klimaanlage gemäß einem dritten Ausführungsbeispiel,
- Fig. 12b: einen Schnitt durch den Kältespeicher von Fig. 12a,
- Fig. 12c: einen Schnitt durch den Kältemittelsammler von Fig. 12a,
- Fig. 13: einen schematisch dargestellten Kältemittel-Kreislauf einer erfindungsgemäßen Klimaanlage gemäß einem vierten Ausführungsbeispiel,
- Fig. 14a-c: schematische Darstellungen eines Verdampfers in verschiedenen Betriebszuständen,
- Fig. 15a-e: schematische Darstellungen eines als Kältemittelspeicher dienenden Verdampfers gemäß einem fünften Ausführungsbeispiel und Abwandlungen hiervon in verschiedenen Betriebszuständen,
- Fig. 16: einen schematisch dargestellten Kältemittel-Kreislauf einer erfindungsgemäßen Klimaanlage gemäß einem sechsten Ausführungsbeispiel,
- Fig. 17: eine Abwandlung des sechsten Ausführungsbeispiels von Fig. 16, und
- Fig. 18: eine weitere Abwandlung des sechsten Ausführungsbeispiels von Fig. 16.

Eine Klimaanlage 1 für ein Kraftfahrzeug weist einen Verdampfer 2 auf, in dem flüssiges Kältemittel 3f zu gasförmigem Kältemittel 3g verdampft wird, wodurch dem den Verdampfer 2 durchströmenden Luftstrom Wärme entzogen wird, so dass der Fahrzeuginnenraum bei Bedarf gekühlt werden kann.

Das Kältemittel 3 wird mittels einer vom Kraftfahrzeug-Motor angetriebenen Kompressor 4 in einem Kältemittel-Kreislauf 5 umgewälzt, wobei es vom Kompressor 4 zu einem Kondensator 6, in dem es gekühlt wird, einem Expansionsorgan 7, durch das das Kältemittel 3 entspannt wird, einem Kältemittelsammler 8, in dem Kältemittel 3 gesammelt wird, zum Verdampfer 2, in dem es verdampft wird, und wieder zum Kompressor 4 gelangt.

Als Expansionsorgan 7 kann ein thermostatisches Expansionsventil, das heißt die Öffnung wird in Abhängigkeit der Überhitzung am Verdampferaustritt geregelt, ein elektronisches Expansionsventil, das von außen geregelt wird, oder eine Festdrossel mit einer fixierten Öffnung verwendet werden.

Wird der Kraftfahrzeug-Motor und somit auch der Kompressor 4 gestoppt, so steigt der Druck vor dem Kompressor 4 an. Das Kältemittel 3, das im Verdampfer 2 verdampft, strömt zurück zum Kältemittelsammler 8, wo es kondensiert und sich sammelt, so dass in Folge der Richtungsumkehr des Kältemittelflusses vor dem Verdampfer 2 der Kältemittelsammler 8 als Druckabsenkungsvorrichtung 10 dient. Bevorzugt ist das Expansionsorgan 7 gemäß dem ersten Ausführungsbeispiel im Idle-stop-Betrieb geschlossen, das heißt, es kann kein Kältemittel nachströmen, so dass kein Kältemittel in den Kältemittelsammler 8 nachströmen kann und dieser unnötig gefüllt wird.

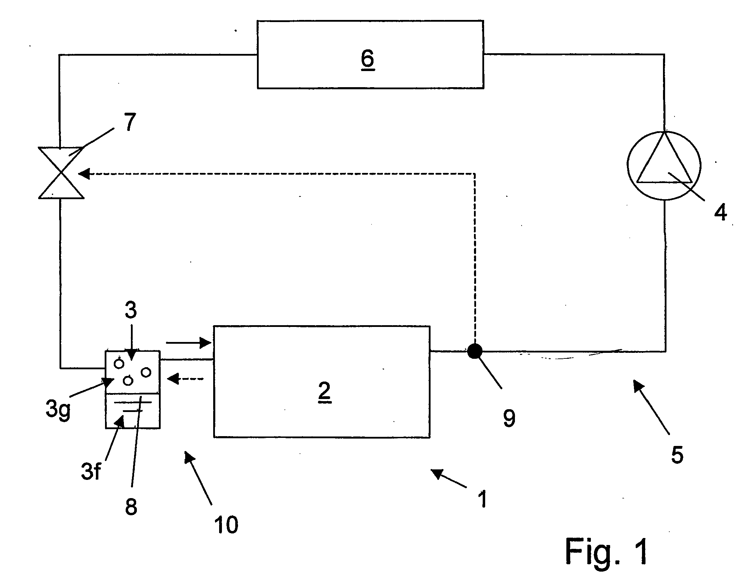

Zur Regelung des thermostatischen Expansionsventils ist ein Temperaturfühler 9 vorgesehen, der über eine in Fig. 1 gestrichelt dargestellte Leitung mit dem Expansionsventil verbunden ist, wobei der Temperaturfühler 9 nach dem Verdampfer 2 und vor dem Kompressor 4 angeordnet ist.

Wird ein nicht vollständig schließbares Expansionsorgan 7 verwendet, so muss ein größerer Kältemittelsammler 8 verwendet werden, um die gesamte Kältemittelmenge aufnehmen zu können.

Zur besseren Verdeutlichung der Strömungsrichtungen in den einzelnen Betriebszuständen ist in Fig. 1 der Normalbetrieb mit durchgezogenen Pfeilen und der Idle-stop-Betrieb mit gestrichelten Pfeilen im Bereich zwischen dem Kältemittelsammler 8 und dem Verdampfer 2 dargestellt.

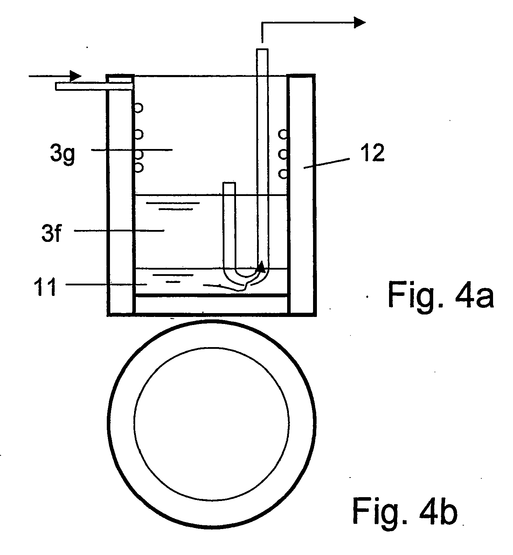

Der Kältemittelsammler 8 gemäß dem ersten Ausführungsbeispiel ist in den Figuren 4a und 4b näher dargestellt. Vorliegend handelt es sich um einen Kältemittelsammler mit Ölrückführung. Hierbei wird dem Kältemittelsammler 8 von oben gasförmiges Kältemittel 3g zugeführt, im Inneren des Kältemittelsammler 8 kondensiert das gasförmige Kältemittel 3g an der Wand des Kältemittelsammlers 8 und fließt als flüssiges Kältemittel 3f nach unten, wo es sich auf einer Ölschicht 11 sammelt. Um die Kondensation des gasförmigen Kältemittels 3g zu beschleunigen, ist um den Kältemittelsammler 8 ein Kältespeicher 12 angeordnet. Dieser Kältespeicher 12 wird beim normalen Kühlbetrieb gekühlt und gibt diese gespeicherte Kälte beim Idle-stop-Betrieb ab.

Obwohl sich bei einem Idle-stop-Betrieb flüssiges Kältemittel 3f und Öl im Kältemittelsammler 8 unten sammeln, treten beim Wiederstarten des Kompressors 4 keine Probleme auf, da die gesammelte Flüssigkeit abgesaugt wird. Auf Grund eines U-Rohres im Kältemittelsammler 8 (siehe Fig. 4) kann nur gasförmiges Kältemittel 3g zum Kompressor 4 gelangen. Die Rückführung des Öls ist durch eine Bohrung unten im U-Rohr gewährleistet.

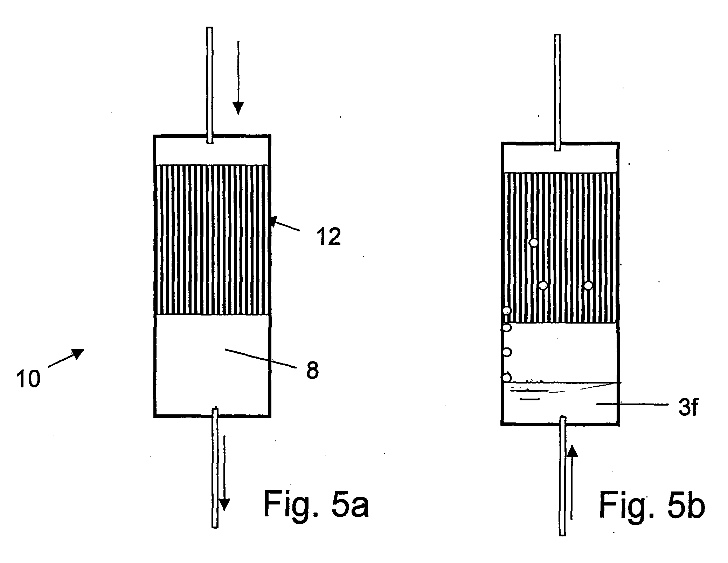

Gemäß einer ersten, nicht explizit in der Zeichnung dargestellten Abwandlung ist als Druckabsenkungsvorrichtung 10 ein Kältemittelsammler 8 vor dem Verdampfer 2 vorgesehen, wie er in den Figuren 5a und 5b dargestellt ist. Im normalen Kühlbetrieb, der in Fig. 5a dargestellt ist, wird der Kältespeicher 12 des Kältemittelsammlers 8 durchströmt, wobei dieser gekühlt wird. Hierbei finden keine Flüssigkeits-ÖI-Ansammlungen statt. Im Idle-stop-Betrieb verdampft das Kältemittel 3 im Verdampfer 2 weiter, so dass, da der Kompressor 4 steht, der Druck ansteigt. Dadurch tritt das gasförmige Kältemittel 3g wieder in den Kältemittelsammler 8 ein, jedoch aus umgekehrter Richtung, wie in Fig. 5b dargestellt. Bei Kontakt mit dem kühlen Kältespeicher 12 kondensiert es und fließt nach unten. Der Kältespeicher 12 liegt gemäß dieser Ausführungsform eines Kältemittelsammlers 8 im oberen Bereich desselben, so dass er nicht von flüssigem Kältemittel 3f blockiert wird und dadurch stets Kälte an das gasförmige Kältemittel 3g abgeben kann.

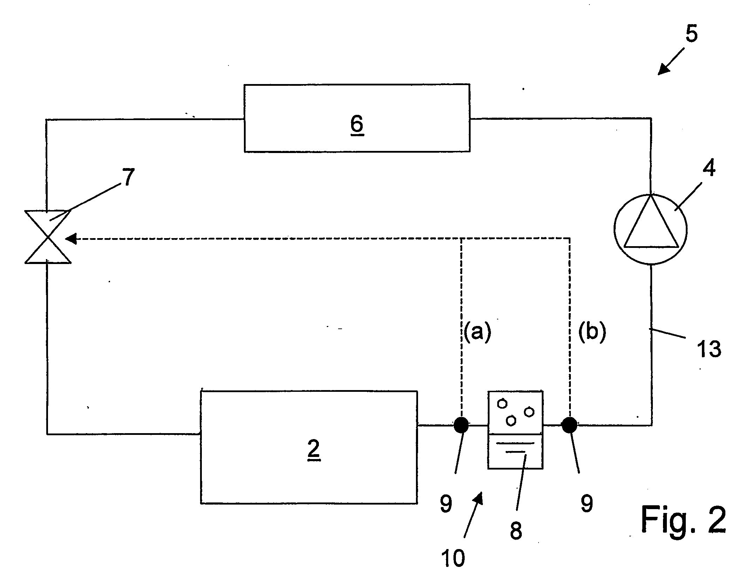

In Fig. 2 ist eine weitere Abwandlung des ersten Ausführungsbeispiels mit zwei alternativen Anordnungen des Temperaturfühlers 9 dargestellt. Hierbei ist der Kältemittelsammler 8 in der Saugleitung 13 nach dem Verdampfer 2 angeordnet. Gemäß der ersten alternativen Anordnung, in der Figur 2 mit (a) bezeichnet, ist der Temperaturfühler 9 zwischen dem Verdampfer 2 und dem Kältemittelsammler 8, gemäß der zweiten alternativen Anordnung, in der Figur 2 mit (b) bezeichnet, ist der Temperaturfühler 9 nach dem Kältemittelsammler 8 und vor dem Kompressor 4 angeordnet. Letztere Stelle begünstigt die Leistung des Kältemittel-Kreislaufs 5 insofern, als dass mehr Kältemittel 3 in den Verdampfer 2 eingespritzt wird, während erstere Stelle die Stabilität des Kältemittel-Kreislaufs 5 gewährleistet. Auch bei dieser Abwandlung wird die Druckabsenkungsvorrichtung 10 durch den Kältemittelsammler 8 gebildet.

Die Funktion der durch den Kältemittelsammler 8 gebildeten Druckabsenkungsvorrichtungen 10 gemäß der vorliegenden Abwandlung des ersten Ausführungsbeispiels ist jeweils im Wesentlichen die Gleiche, wie beim ersten Ausführungsbeispiel. Diese Abwandlung hat gegenüber dem ersten Ausführungsbeispiel den Vorteil, dass durch das Expansionsorgan 7 beim ldle-stop-Betrieb Kältemittelnachschub für den Verdampfer 2 strömen kann, da das Expansionsorgan 7 nicht vollständig geschlossen ist.

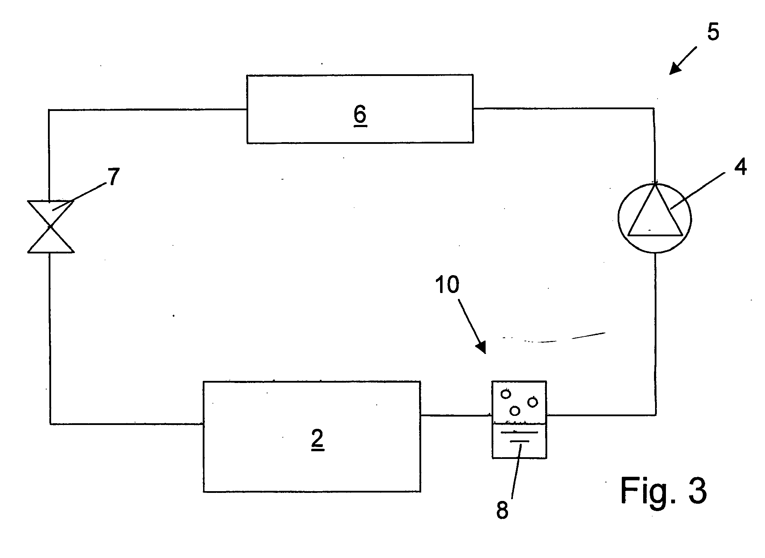

Gemäß einer in Fig. 3 dargestellten, weiteren Abwandlung des ersten Ausführungsbeispiels ist als Expansionsorgan 7 eine Festdrossel (Orifice) vorgesehen. Der Kältemittelsammler 8 ist nach dem Verdampfer 2 und vor dem Kompressor 4 angeordnet. Hierbei wird die Druckabsenkungsvorrichtung 10 durch den Kältemittelsammler 8 gebildet.

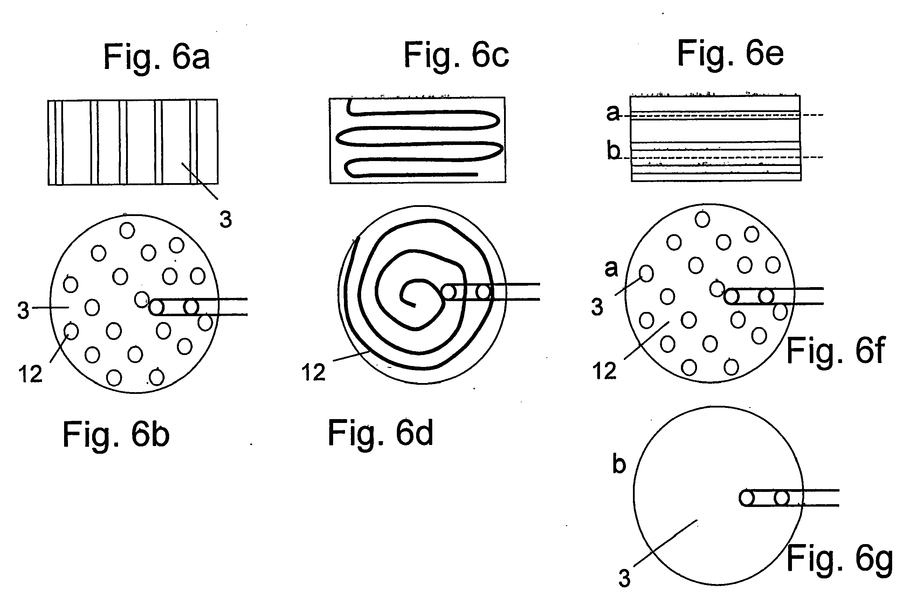

Im Folgenden wird näher auf den Kältespeicher 12 des Kältemittelsammlers 8 eingegangen. Dieser Kältespeicher 12 kann direkt in den Kältemittelsammler 8 integriert werden, beispielsweise durch Metallelemente. Der Kältespeicher 12 kann auch mit einem Medium gefüllt sein, das zur Wärmespeicherung dient und sich durch hohe Wärmekapazität oder durch einen Phasenübergang im entsprechenden Temperaturbereich auszeichnet. Dabei kann der Kältespeicher 12 beispielsweise eine poröse Struktur haben, oder eine Mehrzahl von Formkörpern, z.B. Kugeln, in loser oder geordneter Anordnung aufweisen. Der Kältespeicher 12 kann auch Rohre von beliebigem Querschnitt aufweisen, die beispielsweise wendelförmig, spiralförmig oder mäanderförmig aufgewickelt sind. Er kann auch aus geschlossenen Behältern mit Durchtritten für das Kältemittel 3 bestehen. Zur Vergrößerung der kontaktierenden Oberflächen und zur Verbesserung des Wärmeübergangs können Rippen oder andere Strukturen vorgesehen sein. In den Figuren 6a bis 6g sind verschiedene Ausführungsformen dargestellt, wobei Figuren 6a und 6b einen Kältespeicher 12 bestehend aus einer Mehrzahl von Metallstäbchen zeigt, die gemäß einer Abwandlung auch mit einem Kältespeichermedium gefüllt sein können. Figuren 6c und 6d zeigen ein spiralförmig gewickeltes Rohr aus Metall, das gemäß einer Abwandlung auch mit einem Kältespeichermedium gefüllt sein kann. Figuren 6e bis 6g zeigen einen Kältespeicher 12 mit mehreren Schichten, wobei die in Fig. 6g dargestellte Schicht mit Kältemittel 3 gefüllt ist.

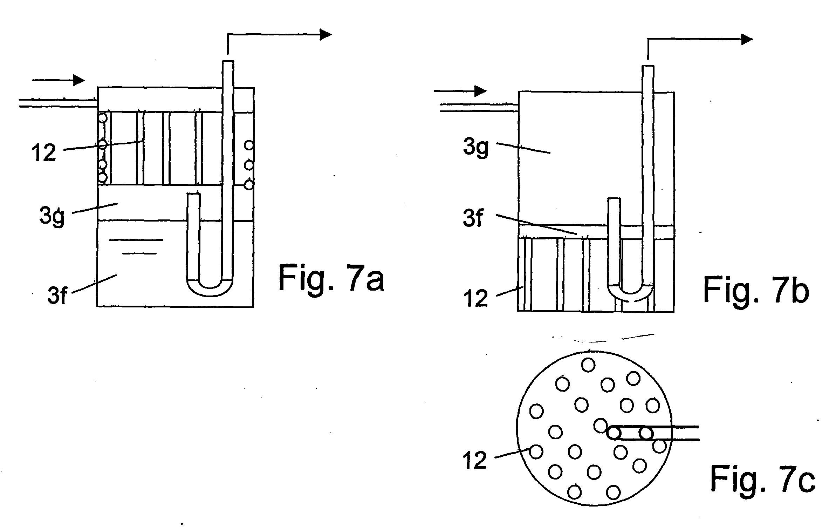

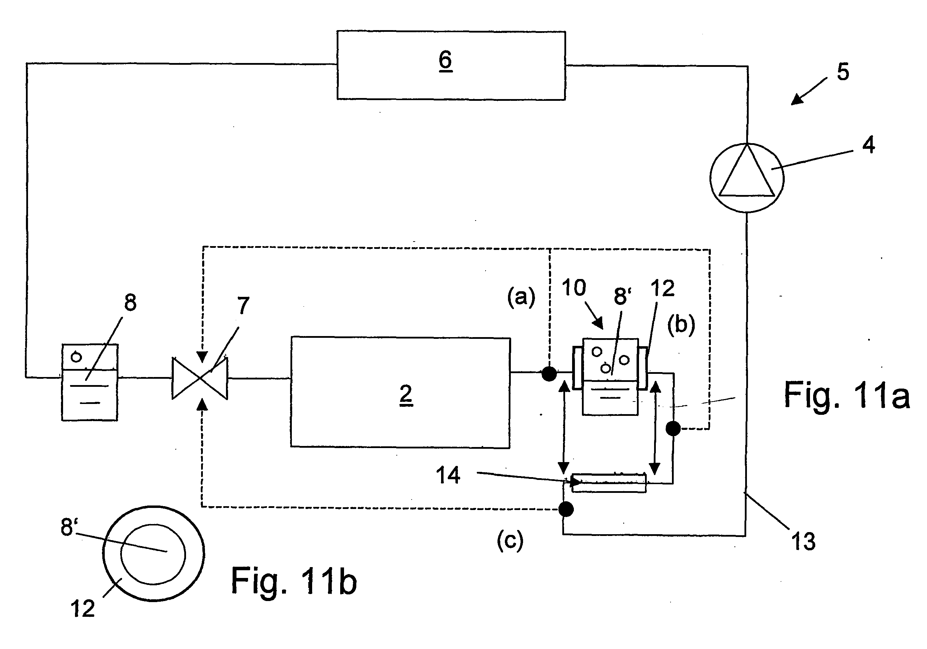

Ein verschiebbarer Kältespeicher 12 im Kältemittelsammler 8, wie in Figuren 7a bis 7c dargestellt, weist eine Mehrzahl von Metallrohren auf, welche miteinander verbunden sind, so dass sie im Inneren des Kältemittelsammlers 8 nach oben und unten verschoben werden können, je nach Bedarf. Die Metallrohre sind vorzugsweise mit einem Kältespeichermedium gefüllt. So gibt der Kältespeicher 12 im in Fig. 7a dargestellten Zustand Kälte an das an ihm kondensierende gasförmige Kältemittel 3g ab, während er im in Fig. 7b dargestellten Zustand in das flüssige Kältemittel 3f eingetaucht ist und beladen wird. Wie aus Fig. 7c ersichtlich ist, ist eine Aussparung für das U-Rohr vorgesehen, so dass der Kältespeicher im zylinderförmigen Kältemittelsammler 8 frei verschiebbar ist. Das Prinzip des verschiebbaren Kältespeichers 12 wird an späterer Stelle unter Bezugnahme auf die Figuren 11a und 11b in Zusammenhang mit einer weiteren Abwandlung des zweiten Ausführungsbeispiels näher erläutert.

Die Nachverdampfung des im Verdampfer 2 zur Verfügung stehenden flüssigen Kältemittels 3f kann bei warmer Umgebungsluft unter Umständen nicht ausreichen, um den Fahrzeuginnenraum ausreichend zu kühlen. Um die Kälteleistung zu erhöhen, kann flüssiges Kältemittel 3f im Kältemittel-Kreislauf 5 gesammelt werden und bei einem Idle-stop-Betrieb in den Verdampfer 2 geführt und dort verdampft werden.

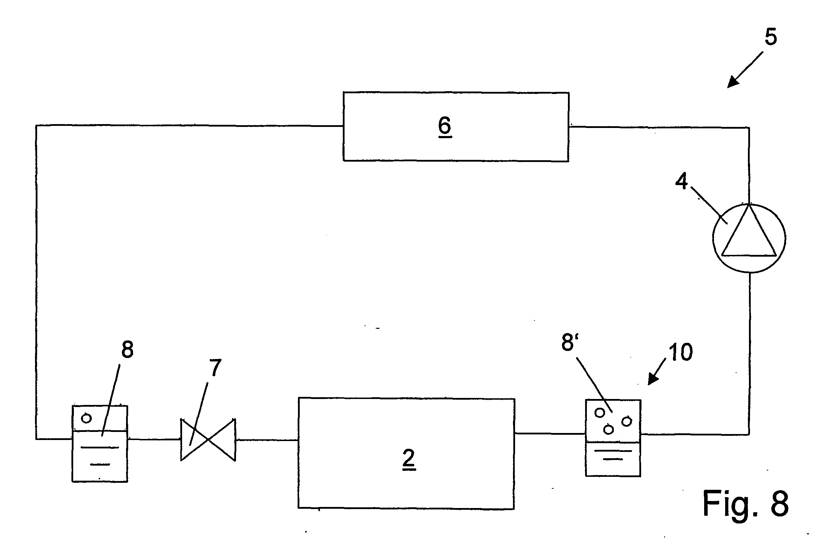

Bevorzugt wird das flüssige Kältemittel 3f am Austritt des Kondensators 6 gesammelt, beispielsweise in einem Kondensatormodul mit Kältemittelsammler oder einem Kältemittelsammler 8, der zwischen Kondensator 6 und Expansionsorgan 7 angeordnet ist, wie in Fig. 8 als zweites Ausführungsbeispiel dargestellt. Auf diesen vor dem Verdampfer 2 angeordneten Kältemittelsammler 8 wird im Folgenden als ersten Kältemittelsammler 8 Bezug genommen.

Im Falle eines Kompressor-Stopps wird das im ersten Kältemittelsammler 8 gesammelte Kältemittel 3 in Folge der Druckdifferenz in den Verdampfer 2 eingespritzt, bis ein Druck-Gleichgewicht erreicht wird.

Fig. 8 zeigt einen Kältemittel-Kreislauf 5, der einen Kompressor 4, einen Kondensator 6, einen ersten Kältemittelsammler 8, der auch direkt in den Kondensator 6 integriert ausgebildet sein kann, ein Expansionsorgan 7, vorliegend eine Festdrossel, einen Verdampfer 2 und einen zweiten Kältemittelsammler 8' aufweist. Im Falle eines Idle-stop-Betriebs strömt das im ersten Kältemittelsammler 8 gesammelte Kältemittel 3 durch das Expansionsorgan 7, expandiert und wird dann im Verdampfer 2 auf Grund der warmen Luft, die den Verdampfer 2 durchströmt, verdampft, und im zweiten Kältemittelsammler 8' wieder kondensiert. Somit dient der zweite Kältemittelsammler 8' als Druckabsenkungsvorrichtung 10, während der erste Kältemittelsammler 8 dafür sorgt, dass ausreichend Kältemittel 3 zur Verfügung steht.

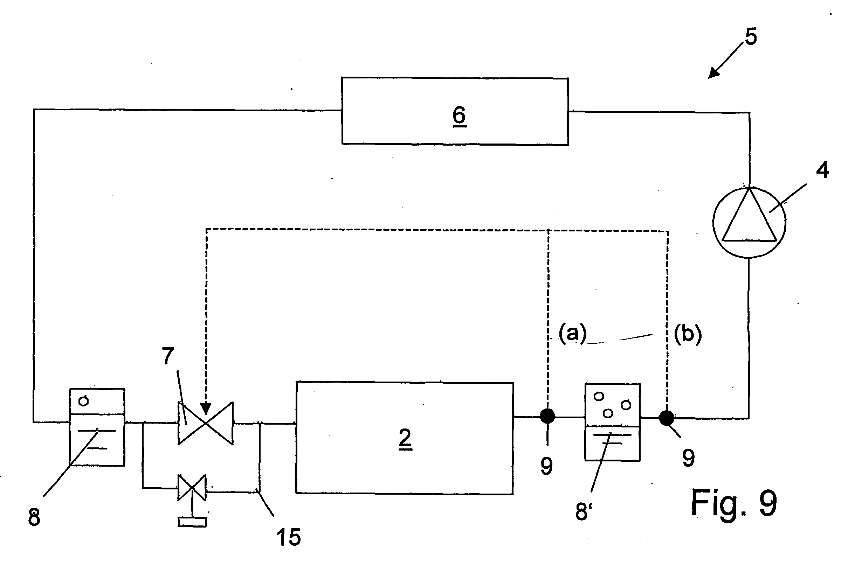

Fig. 9 zeigt eine Abwandlung des zweiten Ausführungsbeispiels von Fig. 8. Hierbei ist an Stelle der Festdrossel als Expansionsorgan 7 ein thermostatisches Expansionsventil angeordnet, wobei gemäß einer Variante ein Bypass 15 mit einem steuerbaren Ventil vorgesehen ist, durch den Kältemittel 3 am Expansionsorgan 7 vorbeigeleitet werden kann (siehe unten).

Das thermostatische Expansionsventil wird gemäß einer ersten Variante (a) durch einen zwischen dem Verdampfer 2 und dem zweiten Kältemittelsammler 8' angeordneten Temperaturfühler 9 und gemäß einer zweiten Variante (b) durch einen zwischen dem zweiten Kältemittelsammler 8' und dem Kompressor 2 angeordneten Temperaturfühler 9 geregelt, wobei die entsprechenden Leitungen in Fig. 9 gestrichelt dargestellt sind. Das Expansionsorgan 7 wird so geregelt, dass die Überhitzung am Verdampfer-Austritt konstant bleibt. Bei einem Kompressor-Stopp nimmt die Überhitzung am Verdampfer-Austritt zu, so dass das Expansionsorgan 7 öffnet, um den Temperaturanstieg auszugleichen. In diesem Fall wird das gesammelte Kältemittel 3 automatisch in den Verdampfer 2 geführt, so dass die Funktion der des zweiten Ausführungsbeispiels entspricht.

Es gibt allerdings auch Expansionsventile, die zuerst vollständig schließen und anschließend wieder öffnen, wenn die Überhitzung einen hohen Wert überschritten hat. Andere Expansionsventile machen auf, wenn die Überhitzung zu groß ist, aber nicht weit genug, um die erforderliche Kältemittelmenge durchströmen zu lassen. In diesem Fall ist der o.g. Bypass 15 mit einem steuerbaren Ventil parallel zum Expansionsventil vorzusehen. Bei einem Kompressor-Stopp durchströmt ein Teil des Kältemittels 3 das Expansionsventil und der restliche Teil durchströmt den Bypass und das steuerbare Ventil, so dass die erforderliche Kältemittelmenge zum Verdampfer 2 gelangt.

Eine weitere Möglichkeit ist die Verwendung eines elektronischen Expansionsventils, das extern steuerbar ist und öffnet, wenn der Kompressor 4 abgeschaltet wird. Bei dieser Variante ist vorteilhaft, dass der erste Kältemittelsammler 8 direkt am Kondensator 6 angeordnet werden kann, wo die Temperaturen niedriger als im Motorraum sind, so dass die Kondensation begünstigt wird.

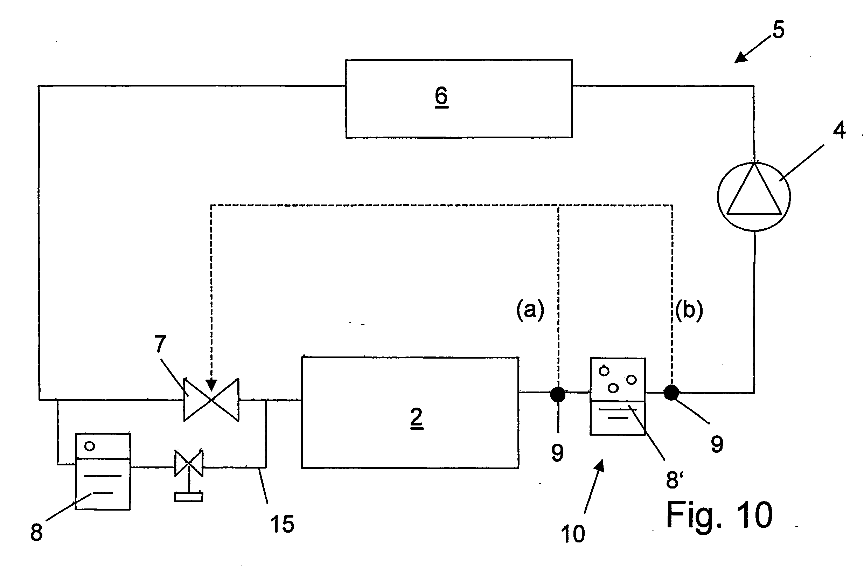

Fig. 10 zeigt eine weitere Abwandlung des zweiten Ausführungsbeispiels von Fig. 8. Hierbei ist ein Kondensator 6 mit Kältemittelsammler am Kondensator-Austritt vorgesehen, um die Zuführung von flüssigem Kältemittel 3f am Eintritt des Expansionsorgans 7 zu vermeiden, dem nachgeordnet ein Bypass 15 abzweigt, der parallel zum Expansionsorgan 7 verläuft und nach demselben wieder dem Hauptkreislauf zugeführt wird. Im Bypass 15 ist ein erster Kältemittelsammler 8 und ein steuerbares Ventil angeordnet. Vorteilhaft bei dieser Abwandlung ist die Dynamik beim Anlaufen. Da das Kältemittel 3 stets durch das Expansionsorgan 7 strömt, erfolgt keine Störung der Klimaanlage 1 entgegen der zuvor beschriebenen Abwandlung, bei der beim Anlaufen zuerst der erste Kältemittelsammler 8 gefüllt wird und anschließend Kältemittel 3 durch das Expansionsorgan strömt.

In Fig. 10 sind wiederum Leitungen für Temperaturfühler 9 im Falle einer Verwendung eines thermostatischen Expansionsventils als Expansionsorgan 7 gestrichelt dargestellt, wobei der Temperaturfühler zwischen dem Verdampfer 2 und dem zweiten Kältemittelspeicher 8' (a) oder dem zweiten Kältemittelspeicher 8' und dem Kompressor 2 (b) angeordnet sein kann.

Gemäß der in Fig. 11a dargestellten weiteren Abwandlung des zweiten Ausführungsbeispiels ist im Kältemittel-Kreislauf 5 ein Kompressor 4, ein Kondensator 6, ein erster Kältemittelsammler 8 ein Expansionsorgan 7, ein Verdampfer 2 und ein zweiter Kältemittelsammler 8' angeordnet. Hierbei ist der zweite Kältemittelsammler 8' als Kältemittelsammler mit verschiebbarem Kältespeicher 12 ausgebildet, wobei der Kältespeicher 12 um den Umfang des Kältemittelsammlers 8' angeordnet ist, wie in Fig. 11b schematisch dargestellt.

Der Kältespeicher 12 bleibt mit der Saugleitung 13 an einer Kontaktstelle 14 im normalen Kühlbetrieb der Klimaanlage 1 in Kontakt, so dass der Kältespeicher 12 gekühlt und somit beladen wird. Wird bei einem Motorstopp der Kompressor 4 ausgeschaltet, so wird der Kältespeicher 12 zum oberen Bereich des Kältemittelsammlers 8 gefahren, um die gespeicherte Kälte an das gasförmige Kältemittel 3g abzugeben, so dass dieses kondensiert. Bei einem erneuten Starten des Kompressors 4 wird der Kältespeicher 12 wieder zur Kontaktstelle 14 gefahren, um wieder beladen zu werden.

Vorliegend ist der Kältespeicher 12 hohlzylindrisch ausgebildet, damit er an der Außenwand des Kältemittelsammlers 8 anliegen kann, wobei er kürzer als der Kältemittels 8 ist und bevorzugt nur den oberen Bereich desselben abdeckt, in welchem sich im Normalfall gasförmiges Kältemittel 3g befindet.

Ein Temperaturfühler 9 zur Steuerung des Expansionsorgans 7, welches gemäß der vorliegenden Abwandlung des zweiten Ausführungsbeispiels ein thermostatisches Expansionsventil ist, kann für die Regelung der Öffnung des Expansionsventils zwischen dem Verdampfer 2 und dem zweiten Kältemittelsammler 8' (a), zwischen dem zweiten Kältemittelsammler 8' und der Kontaktstelle 14 (b) oder zwischen der Kontaktstelle 14 und dem Kompressor 4 (c) angeordnet sein, was in Fig. 11 durch gestrichelte Linien angedeutet ist. Es kann jedoch auch ein beliebiges anderes Expansionsorgan 7 verwendet werden.

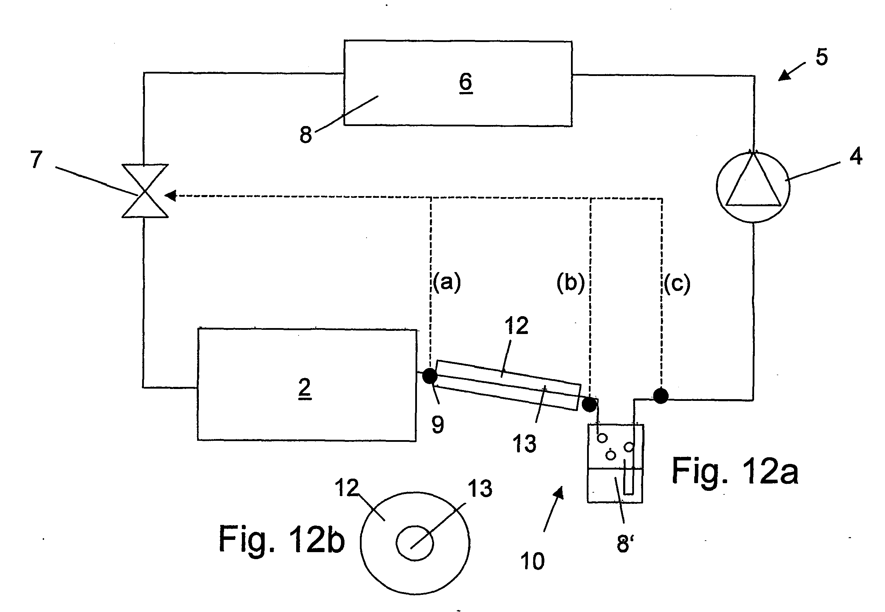

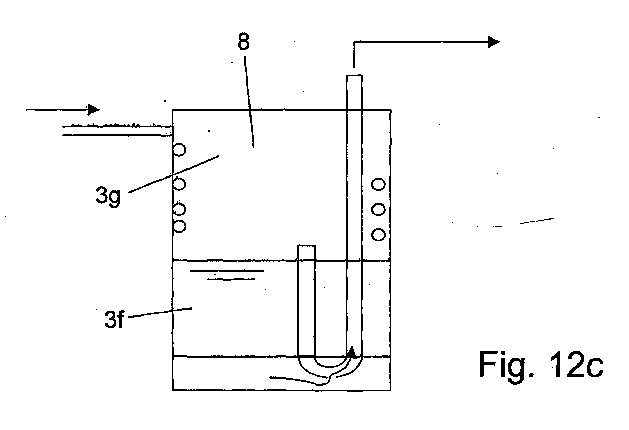

Die Figuren 12a, 12b und 12c zeigen ein drittes Ausführungsbeispiel. Der Kältemittel-Kreislauf 5 weist einen Kompressor 4, einen Kondensator 6, welcher auch als ein erster Kältemittelsammler 8 dient, ein Expansionsorgan 7, einen Verdampfer 2, einen getrennt vom Kältemittelsammler ausgebildeten Kältespeicher 12 und einen zweiten Kältemittelsammler 8' auf. Der Kältespeicher ist nach dem Verdampfer 2 um die Saugleitung 13 herum angeordnet. Dabei ist gemäß dem vorliegenden Ausführungsbeispiel ein doppelwandiges Rohr vorgesehen, so dass der Kältespeicher 12 konzentrisch um einen Teil der Saugleitung 13 ausgebildet ist. Dabei befindet sich ein Kältespeichermedium im äußeren Bereich. Alternativ kann das Rohr der Saugleitung 13 dicker ausgebildet sein oder eine zusätzliche Metallschicht aufweisen. Der zweite Kältemittelsammler 8' ist in Fig. 12c dargestellt und entspricht im Wesentlichen dem Kältemittelsammler 8 von Fig. 4, jedoch ohne Kältespeicher 12.

Im normalen Kühlbetrieb wird der Kältespeicher 12 von durch die Saugleitung 13 strömendem Kältemittel 3 gekühlt und gefroren. Bei einem Idle-stop-Betrieb wird die gespeicherte Kälte an das gasförmige Kältemittel 3g abgegeben, so dass dieses kondensiert und in den nachfolgend angeordneten Kältemittelsammler 8' fließt. Dabei ist die Saugleitung 13 entsprechend angeordnet. Vorteilhafterweise kann die Saugleitung abfallend angeordnet sein, damit das kondensierte Kältemittel besser in den Kältemittelsammler 8' fließen kann.

Zur Steuerung des thermostatischen Expansionsventils, das als Expansionsorgan 7 gemäß dem vorliegenden Ausführungsbeispiel dient, ist wiederum ein Temperaturfühler 9 vorgesehen, das zwischen dem Verdampfer 2 und dem Kältespeicher 12 (a), zwischen dem Kältespeicher 12 und dem zweiten Kältemittelsammler 8' (b) oder zwischen dem zweiten Kältemittelsammler 8' und dem Kompressor 4 (c) angeordnet sein kann.

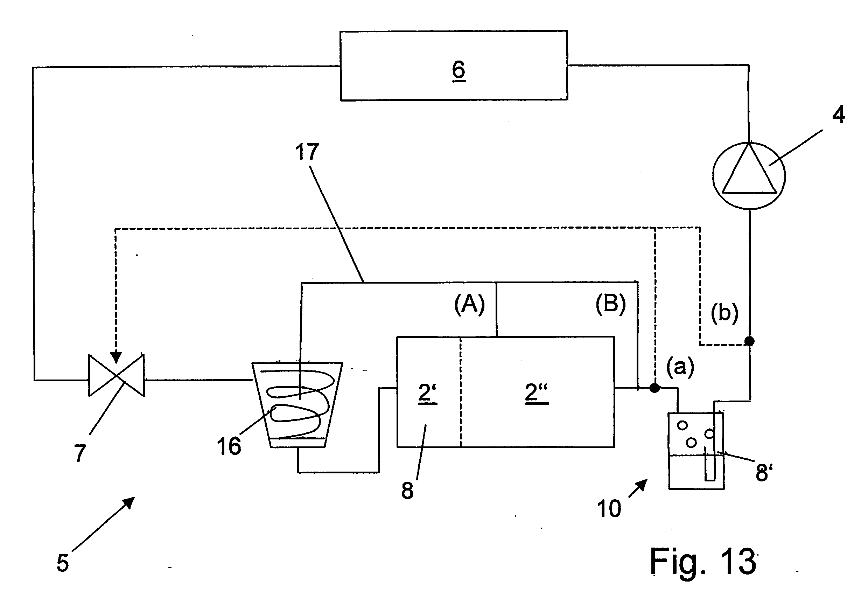

Fig. 13 zeigt einen Kältemittel-Kreislauf 5 mit einem Kompressor 4, einem Kondensator 6, einem Expansionsorgan 7, einem kegelförmigen Zyklon-Abscheider 16, einem zweigeteilten Verdampfer 2, mit einem ersten Segment 2', der zeitweise auch als erster Kältemittelsammler 8 dient und einem zweiten Segment 2" und einem zweiten Kältemittelsammler 8', der auch einen Kältespeicher 12 umfassen kann. Hierbei dient der Zyklon-Abscheider 16 als Phasentrenner, damit mehr flüssiges Kältemittel 3f in den Verdampfer 2 eingespritzt werden kann. Zur Trennung von flüssigem und gasförmigem Kältemittel 3 wird das vom Expansionsorgan 7 kommende Kältemittel 3 in den Zyklon-Abscheider 16 eingespritzt und das flüssige Kältemittel 3f wird durch die Zentrifugalkraft vom gasförmigen Kältemittel 3g getrennt. Das flüssige Kältemittel 3f gelangt an die Wand und fließt im Trichter,nach unten bevor es in den Verdampfer 2 eingespritzt wird Das gasförmige Kältemittel 3g wird entweder durch einen Bypass 17 in das zweite Segment 2" des Verdampfers 2 eingespritzt oder am Verdampfer 2 vorbeigeführt und nach ihm dem Kältemittel-Kreislauf 5 wieder zugeführt. Beide alternative Varianten sind in Fig. 13 dargestellt, wobei die erste Variante mit (A) und die zweite Variante mit (B) bezeichnet ist.

Durch das Trennen des gasförmigen vom flüssigen Kältemittel 3 wird der Anteil an flüssigem Kältemittel 3f am Verdampfer-Eintritt größer (100% an Stelle von ca. 70%), so dass beim Idle-stop-Betrieb mehr Kältemittel 3 nachverdampfen kann. Im Kältemittelsammler 8', der als Druckabsenkungsvorrichtung dient, kondensiert das Kältemittel wieder und wird gesammelt.

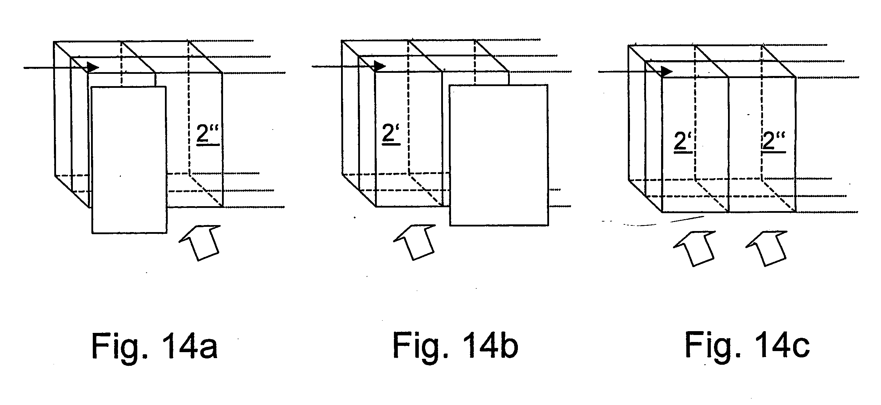

Zur zusätzlichen Verbesserung der Nachverdampfung kann eine luftseitige Absperrung des Verdampfers 2 vorgesehen werden, wie in Figuren 14a bis 14c dargestellt, wobei Fig. 14a das Beladen, Fig. 14b das Entladen eines Segments 2' und Fig. 14c das Entladen des ersten und zweiten Segments 2' und 2" (Cool-down) des Verdampfers 2 zeigt. Der Luftstrom ist dabei durch Pfeile angedeutet. Der Kältemittel-Eintritt ist jeweils oben links vorne schematisch durch einen weiteren Pfeil angedeutet. Im Teillast-Betrieb (Beladen) wird vorzugsweise das erste Drittel am Verdampfer-Eintritt luftseitig abgesperrt (Fig. 14a), so dass der Flüssigkeitsanteil in diesem Segment 2' des Verdampfers 2 maximal bleibt. Bei einem Idle-stop-Betreib, das heißt bei Kompressor-Stillstand, kann, wie in Fig. 14b dargestellt, nur ein Segment 2' zum Durchströmen für den Luftstrom freigegeben sein, was eine gute Temperaturverteilung im Luftstrom ermöglicht. Im Cool-down-Betrieb wird bei Bedarf auch die gesamte Oberfläche des Verdampfers 2 zur Kühlung des Luftstroms verwendet, wobei der Druckabfall im Luftstrom verringert wird.

Das erste Segment 2' des Verdampfers 2 wird vorzugsweise dann gefüllt, wenn der Flüssigkeitsanteil des vom Zyklon-Abscheider 16 kommenden Kältemittels 3 100% beträgt, so dass möglichst viel Kältemittel 3 im ldle-stop-Betrieb nachverdampfen kann.

Falls ein thermostatisches Expansionsventil als Expansionsorgan 7 verwendet wird, so kann der Temperaturfühler 9 entweder nach dem Verdampfer 2 und vor dem zweiten Kältemittelsammler 8' (a) oder nach dem zweiten Kältemittelsammler 8' und vor dem Kompressor 4 (b) angeordnet sein, wie durch gestrichelte Linien in der Fig. 13 angedeutet.

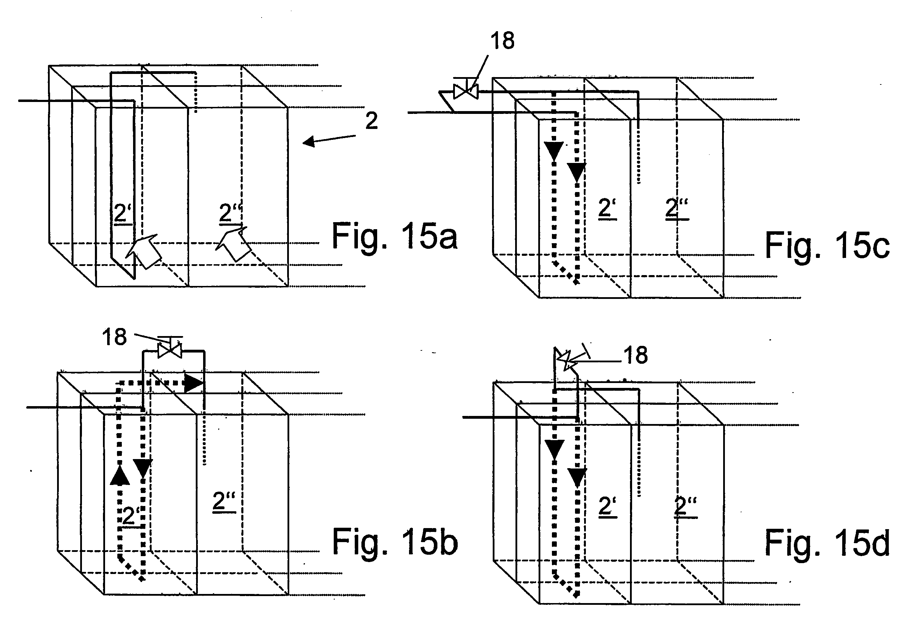

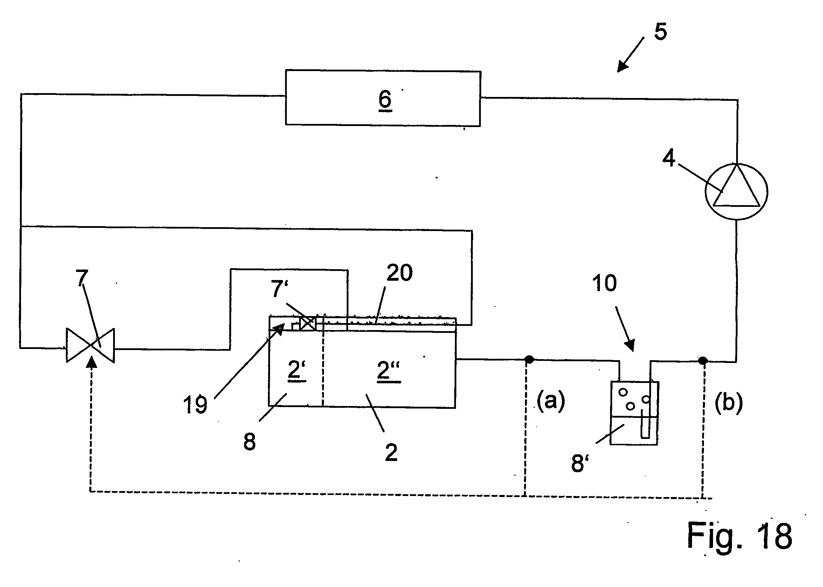

Gemäß einem fünften Ausführungsbeispiel weist der zweiteilige Verdampfer 2, der gemäß dem vorliegenden Ausführungsbeispiel ein Scheibenverdampfer ist, jedoch beispielsweise auch ein Flachrohrverdampfer sein kann, einen Sammeltank (nicht in Fig. 15a dargestellt, vgl. Fig. 18, Sammeltank 20) auf. In Fig. 15a ist schematisch nur der Kältemittelfluss vom Verdampfer-Eintritt durch das erste Segment 2' und der Eintritt in das zweite Segment 2" dargestellt, wobei diese Figur den maximalen Kältemitteldurchsatz, das heißt den Kältemitteldurchsatz bei maximaler Kühlleistung, zeigt.

In den Figuren 15b bis 15e sind verschiedene Abwandlungen dargestellt, bei denen der Verdampfer 2 nur im Teillast-Betrieb betrieben wird. Dabei werden jeweils nur zwei Drittel als Verdampfer 2 benötigt (zweites Segment 2"), das erste Drittel (erstes Segment 2') wird vorne und hinten mit flüssigem Kältemittel 3f beladen. Damit Kältemittel 3 direkt zum zweiten Segment 2" gelangen kann, ist ein Bypass mit Absperr-Ventil 18 zwischen dem Verdampfer-Eintritt und zweiten Segment 2" vorgesehen. Zum besseren Verständnis ist in den Figuren 15b bis 15e der Bereich, in dem flüssiges Kältemittel 3f strömt, gepunktet dargestellt, wobei die Hauptströmungsrichtung durch Pfeile verdeutlicht ist. In den anderen Bereichen ist der Kältemittelfluss, bestehend aus gasförmigem Kältemittel 3g oder einer Mischung von gasförmigem und flüssigem Kältemittel 3 mit durchgezogenen Linien dargestellt.

Gemäß dem in Fig. 15b dargestellten Verdampfer 2 tritt Kältemittel 3 in das erste Segment 2' des Verdampfers 2 ein, wo eine Trennung von flüssigem und gasförmigem Kältemittel 3 erfolgt. Dabei fällt das flüssige Kältemittel 3f in das erste Segment 2' nach unten, während das gasförmige Kältemittel 3g durch den Bypass und das geöffnete Absperr-Ventil 18 in das zweite Segment 2" des Verdampfers 2 gelangt. Damit das Kältemittel 3 im ersten Segment 2' flüssig bleibt, ist dieses Segment 2' luftseitig abgesperrt, so dass es nicht vom Luftstrom durchströmt wird (vgl. Fig. 14a).

Sobald das erste Segment 2' vorne und hinten gefüllt mit flüssigem Kältemittel 3f ist, wird eine Mischung aus flüssigem und gasförmigem Kältemittel 3 durch den Bypass und das Absperr-Ventil 18 geleitet, so dass das zweite Segment 2" und gegebenenfalls weitere Segmente eine für den Normalbetrieb ausreichende Kälteleistung abgeben können. Wird die maximale Kälteleistung im Falle eines Cool-down-Betriebs benötigt, so wird das Absperr-Ventil 18 geschlossen und der Kältemittelfluss erfolgt wieder, wie in Fig. 15a dargestellt, das heißt, der ganze Verdampfer 2 wird durchströmt.

Beim Idle-stop-Betrieb erfolgt bei geschlossenem Absperr-Ventil 18 ein Entladen, wie in den Figuren 14b und 14c dargestellt. Dabei strömt ein Luftstrom durch das erste Segment 2', so dass das gesammelte flüssige Kältemittel 3f verdampft und der Luftstrom gekühlt wird. Die Funktion entspricht der bereits zuvor unter Bezugnahme auf die Figuren 14a bis 14c beschriebenen.

Fig. 15c zeigt eine Anordnung des Bypasses mit dem Absperr-Ventil 18 parallel zum Kältemittel-Eintritt. Die Funktion ist im Wesentlichen die Gleiche, wie zuvor beschrieben. Das Absperr-Ventil 18 ist zum Beladen geöffnet, so dass flüssiges Kältemittel 3f sich im ersten Segment 2' ansammelt, während das gasförmige Kältemittel 3g den kürzeren Weg nimmt und direkt zum zweiten Segment 2" strömt. Sobald das erste Segment 2' gefüllt ist, wirkt das zweite Segment 2" wieder als Verdampfer, in den flüssiges und gasförmiges Kältemittel eingespritzt wird. Das Entladen erfolgt, wie zuvor beschrieben.

Gemäß der in Fig. 15d dargestellten Abwandlung ist der Bypass mit dem Absperr-Ventil 18 zwischen dem vorderen und dem hinteren Bereich des ersten Segments 2' angeordnet. Die Funktion ist die Gleiche, wie zuvor beschrieben.

Die beiden zuvor beschriebenen Abwandlungen haben den Vorteil, dass das erste Segment 2' schneller befüllt wird, da das flüssige Kältemittel 3f vorne und hinten gleichzeitig das erste Segment 2' befüllt (siehe Fig. 15c und 15d).

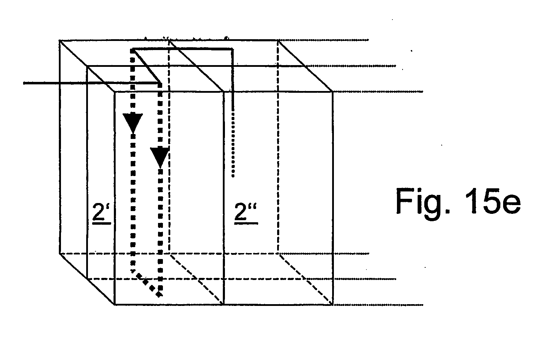

In Fig. 15e ist eine Abwandlung mit Bypass, aber ohne Absperr-Ventil, dargestellt. Zum Beladen strömt das flüssige Kältemittel 3f entsprechend der zuvor beschriebenen Abwandlung gleichzeitig vorne und hinten in das erste Segment 2', das luftseitig abgesperrt ist (siehe Fig. 14a), während das gasförmige Kältemittel 3g direkt zum zweiten Segment 2" strömt. Zum Entladen wird das erste Segment 2' vom Luftstrom durchströmt, der gekühlt wird. Da das Kältemittel 3 den kürzesten Weg nimmt, wird das erste Segment 2' beim Cool-down nicht durchströmt, wodurch die maximale Kälteleistung reduziert wird. Damit die gleiche Kälteleistung erreicht wird, kann der Verdampfer 2 größer dimensioniert werden.

Zur Begünstigung der Trennung von flüssigem und gasförmigem Kältemittel 3 ist bevorzugt der Sammeltank am ersten Segment 2' oben vergrößert ausgebildet. Durch das größere Volumen des Sammeltanks wird die Strömungsgeschwindigkeit reduziert, so dass die Trennung des flüssigen und gasförmigen Kältemittels 3 effektiver wird.

Um eine Ölansammlung im unteren Bereich des ersten Segments 2' zu vermeiden, was zu einer Beschädigung des nicht mehr ausreichend geschmierten Kompressors 4 führen könnte, wird eine kleine Leckage im unteren Bereich zwischen dem ersten und zweiten Segment 2' und 2" des Verdampfers 2 vorgesehen (vorne oder hinten). So wird das Öl wieder in das zweite Segment 2" eingespritzt, wo es mit dem restlichen Kältemittel 3 verdampft und vom Kompressor 4 abgesaugt wird.

Somit dient gemäß diesem Ausführungsbeispiel mit seinen Abwandlungen das erste Segment 2' des Verdampfers 2 als Kältemittelsammler 8.

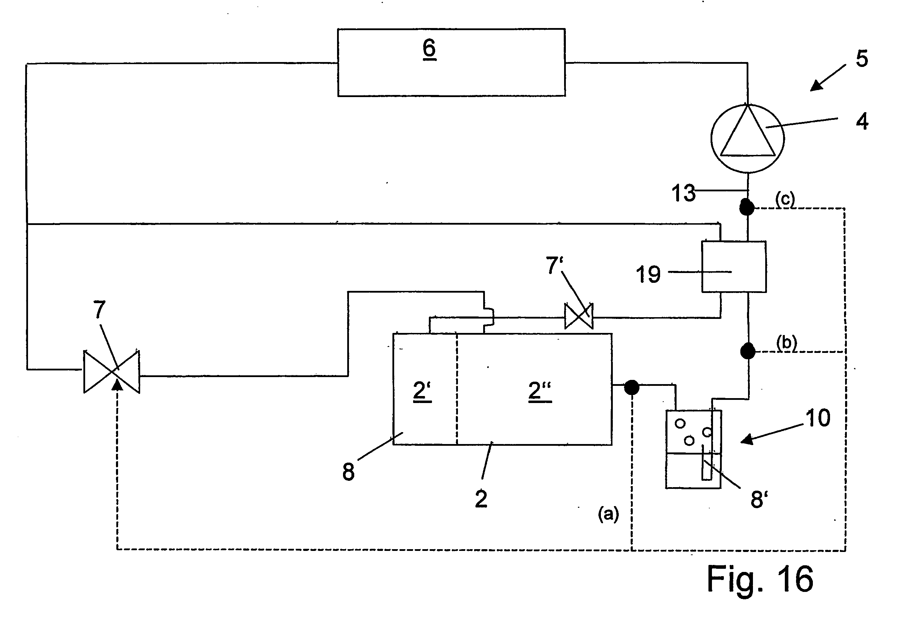

Gemäß einem sechsten Ausführungsbeispiel, das in Fig. 16 dargestellt ist, weist ein Kältemittel-Kreislauf 5 einen Kompressor 4, einen Kondensator 6, ein Expansionsorgan 7, einen zweiteiligen Verdampfer 2 mit einem ersten Segment 2' und einem zweiten Segment 2", wobei das erste Segment 2' als ein erster Kältemittelsammer 8 dient, einen zweiten Kältemittelsammler 8', einen inneren Wärmetauscher 19 und ein zweites Expansionsorgan 7' auf.

Im Normalbetrieb durchströmt das Kältemittel 3, das vom Kompressor 4 gefördert wird, den Kompressor 4, den Kondensator 6, wonach der Kältemittelstrom aufgeteilt wird. Ein Teil strömt durch das Expansionsorgan 7 und gelangt direkt in das zweite Segment 2" des Verdampfers 2. Der andere Teil strömt durch den inneren Wärmetauscher 19, durch das zweite Expansionsorgan 7' und in das erste Segment 2' des Verdampfers 2, von wo aus es zum zweiten Segment 2" gelangt und mit dem anderen Teilstrom wieder vereinigt wird. Vom Verdampfer 2 aus gelangt das Kältemittel 3 zum zweiten Kältemittelsammler 8', zum innern Wärmetauscher 19 und wieder zum Kompressor 4.

Bei normalem Kühlbetrieb der Klimaanlage 1 liegt der Anteil an flüssigem Kältemittel 3f am Austritt des Kondensators 6 bei ca. 70%. Durch die Kälte der Saugleitung 13 kann im inneren Wärmetauscher 19 der Anteil an flüssigem Kältemittel 3f auf bis zu 100% erhöht werden. Das flüssige Kältemittel 3f wird dann durch das zweite Expansionsorgan 7' auf einen niedrigen Druck expandiert und in das erste Segment 2' des Verdampfers 2 eingespritzt, wo es sich sammelt und auf Grund einer luftseitigen Absperrung nicht in Kontakt mit dem den Verdampfer 2 durchströmenden, zu kühlenden Luftstrom gelangt. Die Kühlung des Luftstroms erfolgt im Teillast-Betrieb ausschließlich im zweiten Segment 2" des Verdampfers 2. Dies ist, sofern nicht die maximale Kälteleistung angefordert wird, unproblematisch. Im Idle-stop-Betrieb wird der Luftstrom durch das erste Segment 2' freigegeben, so dass das gesammelte flüssige Kältemittel 3f verdampft, den Verdampfer 2 durchströmt und im zweiten Kältemittelsammler 8' gesammelt wird. Im -Cool-down wird wiederum die gesamte Verdampferoberfläche genutzt, damit die maximale Kälteleistung zur Verfügung steht.

Vorliegend wird als erstes Expansionsorgan 7 ein thermostatisches Expansionsventil verwendet. Der Temperaturfühler kann zwischen dem Verdampfer 2 und dem zweiten Kältemittelsammler 8', zwischen dem zweiten Kältemittelsammler 8' und dem inneren Wärmetauscher 19 oder zwischen dem inneren Wärmetauscher 19 und dem Kompressor 4 angeordnet sein, wie durch Punkte in Fig. 16 angedeutet.

Das zweite Expansionsorgan 7' kann eine geregelte oder ungeregelt Drossel sein. Ferner kann die Leitung zwischen dem inneren Wärmetauscher 19 und dem Verdampfer-Eintritt als Kapillarrohr ausgebildet sein, wodurch das Kapillarrohr das Expasionsorgan bildet.

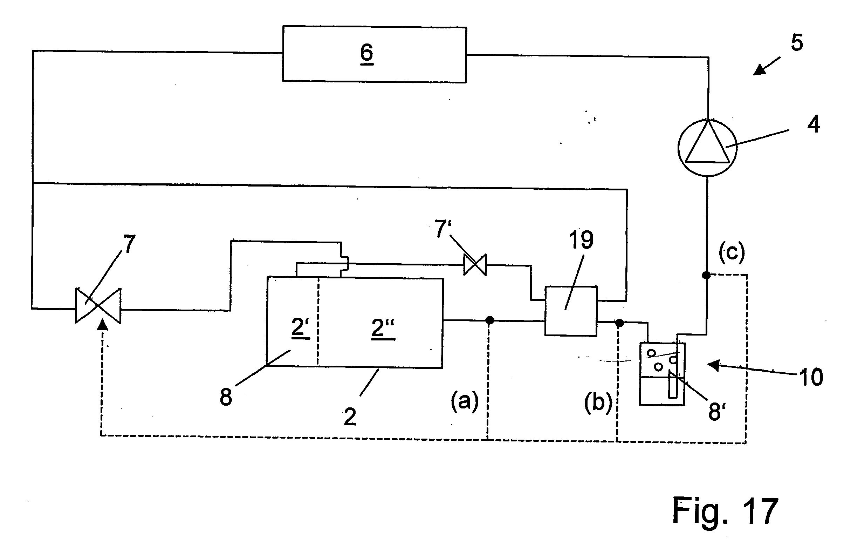

Gemäß einer in Fig. 17 dargestellten Abwandlung ist der innere Wärmetauscher vor dem zweiten Kältemittelsammler 8' angeordnet. Die Funktion ist die Gleiche, wie zuvor beschrieben.

Fig. 18 zeigt eine weitere Abwandlung des sechsten Ausführungsbeispiels. Hierbei sind der innere Wärmetauscher 19 und das zweite Expansionsorgan 7' direkt in den Sammlertank 20 des Verdampfers 2 integriert. Dies kann am Sammlertank 20 entweder im ersten Segment 2' oder zwischen dem ersten und dem zweiten Segment 2' und 2", wie dargestellt, sein. Im inneren Wärmetauscher 19 erfolgt ein Wärmeaustausch zwischen dem Kältemittel 3, das vom Kondensator 6 kommt und dem Kältemittel 3, das im zweiten Segment 2" des Wärmetauschers 2 gerade verdampft, statt. Dabei wird das Kältemittel 3, das vom Kondensator 6 kommt, so gekühlt und durch das zweite Expansionsorgan 7' so expandiert, dass der Flüssigkeitsanteil von ca. 70 auf ca. 100% erhöht wird. Das flüssige Kältemittel 3f wird danach in das erste Segment 2' des Verdampfers 2 eingespritzt, wo es angesammelt wird. Die Funktion ist die Gleiche, wie zuvor beschrieben.

Vorliegend wird als erstes Expansionsorgan 7 ein thermostatisches Expansionsventil verwendet. Der Temperaturfühler kann zwischen dem Verdampfer 2 und dem zweiten Kältemittelsammler 8' oder zwischen dem zweiten Kältemittelsammler 8' und dem Kompressor 4 angeordnet sein, wie durch Punkte in Fig. 18 angedeutet.

Vorteil dieser Abwandlung ist der Raumgewinn im Kältemittel-Kreislauf 5 durch die Anordnung des zweiten Expansionsorgans 7' und des inneren Wärmetauschers 19 im Sammlertank 20.

Auf Grund seiner Funktion dient gemäß diesem Ausführungsbeispiel mit seinen Abwandlungen der zweite Kältemittelsammler 8' als Druckabsenkungsvorrichtung 10.

In den Figuren 15a bis 18 dient der Kältemittelsammler 8' als Druckabsenkungsvorrichtung. Das erste Segment 2' des Verdampfers 2 dient als Sammler von flüssigem Kältemittel, um durch die Nachverdampfung des flüssigen Kältemittels beim Idle-Stop-Betrieb die Kälteleistung zu vergrößern.

Gemäß sämtlichen vorstehenden Ausführungsbeispielen bilden der oder die Kältemittelsammler 8 und/oder 8' die Druckabsenkungsvorrichtung 10, so dass der Druck in der Saugleitung 13 und den weiteren Leitungen des Kältemittel-Kreislaufs 5, insbesondere zwischen Expansionsorgan 7 und Kompressor 4, in Folge einer Verdampfung von flüssigem Kältemittel 3f im Verdampfer 2 bei einem Idle-stop-Betrieb durch die Kondensation von gasförmigem Kältemittel 3g gering gehalten wird. Die Wirkung der Druckabsenkungsvorrichtung 10 kann durch Kältespeicher 12 unterstützt werden.

### Bezugszeichenliste

- 1: Klimaanlage
- 2: Verdampfer
- 2', 2": Segment
- 3: Kältemittel
- 3f: flüssiges Kältemittel
- 3g: gasförmiges Kältemittel
- 4: Kompressor
- 5: Kältemittel-Kreislauf
- 6: Kondensator
- 7, 7': Expansionsorgan
- 8, 8': Kältemittelsammler
- 9: Bypass
- 10: Druckabsenkungsvorrichtung
- 11: Ölschicht
- 12: Kältespeicher
- 13: Saugleitung
- 14: Kontaktstelle
- 15: Bypass
- 16: Zyklon-Abscheider
- 17: Bypass
- 18: Absperr-Ventil
- 19: innerer Wärmetauscher
- 20: Sammlertank

## Patentansprüche

1. Kältemittel-Kreislauf für eine Kraftfahrzeug-Klimaanlage (1) mit einem von einem Kraftfahrzeug-Motor angetriebenen Kompressor (4), einem Kondensator (6), einem Expansionsorgan (7), einem Kältemittelsammler (8) und einem Verdampfer (2), **dadurch gekennzeichnet, dass** eine Druckabsenkungsvorrichtung (10) im Kreislauf (5) vorgesehen ist, welche eine Druckabsenkung im Falle eines Kompressor-Stillstands bewirkt, wobei die Druckabsenkungsvorrichtung (10) mindestens einen Kältemittelsammler (8, 8') aufweist und wobei zwei Kältemittelsammler (8, 8') vorgesehen sind, wobei ein erster Kältemittelsammler (8) nach dem Kondensator (6) oder integriert in denselben angeordnet ist und ein zweiter oder weiterer Kältemittelsammler (8') nach dem Verdampfer (2) und vor dem Kompressor (4) angeordnet ist.

2. Kältemittel-Kreislauf nach Anspruch 1, **dadurch gekennzeichnet, dass** der Kältemittelsammler (8, 8') einen Kältespeicher (12) aufweist.

3. Kältemittel-Kreislauf nach Anspruch 2, **dadurch gekennzeichnet, dass** der Kältespeicher (12) Metallelemente und/oder mit einem Kältespeichermedium gefüllte Elemente aufweist.

4. Kältemittel-Kreislauf nach Anspruch 2 oder 3, **dadurch gekennzeichnet, dass** der Kältespeicher (12) verschiebbar ausgebildet ist.

5. Kältemittel-Kreislauf nach einem der Ansprüche 1 bis 4, **dadurch gekennzeichnet, dass** zwischen dem Kondensator (6) und dem Verdampfer (2) ein Expansionsorgan (7) angeordnet ist, das Expansionsorgan (7) ein thermostatisches Expansionsventil mit einem Temperaturfühler (9) ist, und der Temperaturfühler (9) nach dem Verdampfer (2) und vor dem Kompressor (4) angeordnet ist.

6. Kältemittel-Kreislauf nach einem der Ansprüche 1 bis 5, **dadurch gekennzeichnet, dass** parallel zum Expansionsorgan (7) ein Bypass (15) mit einem steuerbaren Ventil angeordnet ist.

7. Kältemittel-Kreislauf nach einem der Ansprüche 1 bis 6, **dadurch gekennzeichnet, dass** zwischen dem Verdampfer (2) und einem Kältemittelsammler (8') ein Kältespeicher (12) angeordnet ist.

8. Kältemittel-Kreislauf nach einem der Ansprüche 1 bis 7, **dadurch gekennzeichnet, dass** zwischen dem Expansionsorgan (7) und dem Verdampfer (2) ein Phasentrenner (16) angeordnet ist.

9. Kältemittel-Kreislauf nach einem der Ansprüche 1 bis 8, **dadurch gekennzeichnet, dass** der Verdampfer (2) zwei- oder mehrteilig ausgebildet ist, wobei flüssiges Kältemittel (3f) dem ersten Segment (2') und gasförmiges und/oder flüssiges Kältemittel (3g bzw. 3f) dem zweiten Segment (2") oder nachfolgenden Segmenten zuführbar ist.

10. Kältemittel-Kreislauf nach einem der Ansprüche 1 bis 8, **dadurch gekennzeichnet, dass** der Verdampfer (2) zwei- oder mehrteilig ausgebildet ist, wobei ein Bypass zwischen dem Einlass des Verdampfers (2) und dem zweiten Segment (2") des Verdampfers (2) vorgesehen ist.

11. Kältemittel-Kreislauf nach Anspruch 10, **dadurch gekennzeichnet, dass** im Bypass ein Absperr-Ventil (18) angeordnet ist.

12. Kältemittel-Kreislauf nach einem der Ansprüche 1 bis 11 **dadurch gekennzeichnet, dass** ein interner Wärmetauscher (19) im Kältemittel-Kreislauf (5) angeordnet ist.

13. Kältemittel-Kreislauf nach Anspruch 12, **dadurch gekennzeichnet, dass** eine Leitung vom Kondensator (6) über den internen Wärmetauscher (19) und ein zweites Expansionsorgan (7') zum ersten Segment (2') des mehrteiligen Verdampfers (2) und eine Leitung vom Kondensator (6) über das Expansionsorgan (7) zum zweiten oder einem weiteren Segment (2") des mehrteiligen Verdampfers (2) ausgebildet ist, wobei das erste Segment (2') des Verdampfers (2) als Kältemittelsammler (8) dient.

14. Kältemittel-Kreislauf nach Anspruch 13, **dadurch gekennzeichnet, dass** der interne Wärmetauscher (19) und das zweite Expansionsorgan (7') in einem Sammlertank (20) des Verdampfers (2) angeordnet sind.

15. Kältemittel-Kreislauf nach einem der Ansprüche 1 bis 14 **dadurch gekennzeichnet, dass** die Druckabsenkungsvorrichtung (10) zwischen Expansionsorgan (7) und Kompressor (4) angeordnet ist.

16. Klimaanlage **gekennzeichnet durch** einen Kältemittel-Kreislauf (5) nach einem der Ansprüche 1 bis 15.

17. Verfahren zum Betrieb einer Klimaanlage (1) nach Anspruch 16, wobei in einem ldle-stop-Betrieb Kältemittel (3) eines Kältemittel-Kreislaufs (5) in mindestens einem Kältemittelsammler (8, 8') gesammelt wird, der als Druckabsenkungsvorrichtung (10) dient.

18. Verfahren nach Anspruch 17, **dadurch gekennzeichnet, dass** bei einem mehrteiligen Verdampfer (2) mit mindestens zwei Segmenten (2', 2") zum Beladen zumindest das Segment (2') nicht vom Luftstrom durchströmt wird, in dem flüssiges Kältemittel (3f) angesammelt wird.

19. Verfahren nach Anspruch 17 oder 18, **dadurch gekennzeichnet, dass** bei einem mehrteiligen Verdampfer (2) mit mindestens zwei Segmenten (2', 2") zum Entladen im Idie-stop-Betrieb das erste Segment (2') vom Luftstrom durchströmt wird.

20. Verfahren nach einem der Ansprüche 21 bis 23, **dadurch gekennzeichnet, dass** bei einem mehrteiligen Verdampfer (2) mit mindestens zwei Segmenten (2', 2") im Cool-down-Betrieb alle Segmente (2', 2") vom Luftstrom durchströmt werden.

## Claims

1. Refrigerant circuit for a motor vehicle air conditioning system (1), with a compressor (4) driven by a motor vehicle engine, a condenser (6), an expansion device (7), an accumulator-drier (8) and an evaporator (2), **characterised in that** the circuit (5) includes a pressure reducing device (10) effecting a pressure reduction if the compressor is stopped, wherein the pressure reducing device (10) comprises at least one accumulator-drier (8, 8') and wherein two accumulator-driers (8, 8') are provided, wherein a first accumulator-drier (8) is located downstream of the condenser (6) or integrated therewith and a second or further accumulator-drier (8') is located downstream of the evaporator (2) and upstream of the compressor (4).

2. Refrigerant circuit according to claim 1, **characterised in that** the accumulator-drier (8, 8') comprises a refrigeration reservoir (12).

3. Refrigerant circuit according to claim 2, **characterised in that** the refrigeration reservoir (12) comprises metal elements and/or elements filled with a refrigeration reservoir medium.

4. Refrigerant circuit according to claim 2 or 3, **characterised in that** the refrigeration reservoir (12) is designed to be slidable.

5. Refrigerant circuit according to any of claims 1 to 4, **characterised in that** an expansion device (7) is provided between the condenser (6) and the evaporator (2), **in that** the expansion device (7) is a thermostatic expansion valve with a temperature sensor (9), and **in that** the temperature sensor (9) is located downstream of the evaporator (2) and upstream of the compressor (4).

6. Refrigerant circuit according to any of claims 1 to 5, **characterised in that** a bypass (15) with a controllable valve is provided parallel to the expansion device (7).

7. Refrigerant circuit according to any of claims 1 to 6, **characterised in that** a refrigeration reservoir (12) is provided between the evaporator (2) and one of the accumulator-driers (8').

8. Refrigerant circuit according to any of claims I to 7, **characterised in that** a phase separator (16) is provided between the expansion device (7) and the evaporator (2).

9. Refrigerant circuit according to any of claims 1 to 8, **characterised in that** the evaporator (2) is designed in two or more parts, wherein liquid refrigerant (3f) can be fed to the first segment (2') and gaseous and/or liquid refrigerant (3g or 3f) can be fed to the second segment (2") or any subsequent segments.

10. Refrigerant circuit according to any of claims 1 to 8, **characterised in that** the evaporator (2) is designed in two or more parts, wherein a bypass is provided between the inlet of the evaporator (2) and the second segment (2") of the evaporator (2).

11. Refrigerant circuit according to claim 10, **characterised in that** a shut-off valve (18) is provided in the bypass.

12. Refrigerant circuit according to any of claims 1 to 11, **characterised in that** an internal heat exchanger (19) is provided in the refrigerant circuit (5).

13. Refrigerant circuit according to claim 12, **characterised in that** a line runs from the condenser (6) through the internal heat exchanger (19) and a second expansion device (7') to the first segment (2') of the multi-part evaporator (2) and a line runs from the condenser (6) through the expansion device (7) to the first or a further segment (2") of the multi-part evaporator (2), the first segment (2') of the evaporator (2) serving as accumulator-drier (8).

14. Refrigerant circuit according to claim 13, **characterised in that** the internal heat exchanger (19) and the second expansion device (7') are located in a collector tank (20) of the evaporator (2).

15. Refrigerant circuit according to any of claims 1 to 14, **characterised in that** the pressure reducing device (10) is located between the expansion device (7) and the compressor (4).

16. Air conditioning system, **characterised by** a refrigerant circuit (5) according to any of claims 1 to 15.

17. Method for the operation of an air conditioning system (1) according to claim 16, wherein refrigerant (3) of a refrigerant circuit (5) is collected in at least one accumulator-drier (8, 8') serving as a pressure reducing device (10) in an idle-stop mode.

18. Method according to claim 17, **characterised in that**, in a multi-part evaporator (2) with at least two segments (2', 2"), there is no air flow for charging through at least the segment (2') in which liquid refrigerant (3f) is collected.

19. Method according to claim 17 or 18, **characterised in that**, in a multi-part evaporator (2) with at least two segments (2', 2"), air flows through the first segment (2') for discharging in the idle-stop mode.

20. Method according to any of claims 21 to 23, **characterised in that**, in a multi-part evaporator (2) with at least two segments (2', 2"), air flows through all segments (2', 2") in the cool-down mode.

## Revendications

1. Circuit de fluide frigorigène pour un système de climatisation (1) d'un véhicule automobile, comprenant un compresseur (4) entraîné par le moteur d'un véhicule automobile, un condenseur (6), un détendeur (7), un collecteur de fluide frigorigène (8) et un évaporateur (2),
**caractérisé en ce qu'**il est prévu, dans le circuit (5), un dispositif (10) de diminution de la pression qui, dans le cas d'un arrêt du compresseur, provoque une diminution de la pression, où le dispositif (10) de diminution de la pression présente au moins un collecteur de fluide frigorigène (8, 8') et où il est prévu deux collecteurs de fluide frigorigène (8, 8'), où un premier collecteur de fluide frigorigène (8) est disposé en aval du condenseur (6) ou bien intégré à celui-ci, et un deuxième ou un autre collecteur de fluide frigorigène (8') est disposé en aval de l'évaporateur (2) et en amont du compresseur (4).

2. Circuit de fluide frigorigène selon la revendication 1, **caractérisé en ce que** le collecteur de fluide frigorigène (8, 8') présente un accumulateur de froid (12).

3. Circuit de fluide frigorigène selon la revendication 2, **caractérisé en ce que** l'accumulateur de froid (12) présente des éléments métalliques et / ou des éléments remplis par un milieu contenu dans l'accumulateur de froid.

4. Circuit de fluide frigorigène selon la revendication 2 ou 3, **caractérisé en ce que** l'accumulateur de froid (12) est configuré de façon mobile.

5. Circuit de fluide frigorigène selon l'une quelconque des revendications 1 à 4, **caractérisé en ce qu'**un détendeur (7) est disposé entre le condenseur (6) et l'évaporateur (2), **en ce que** le détendeur (7) est une soupape de détente thermostatique comprenant un capteur de température (9), et **en ce que** le capteur de température (9) est disposé en aval de l'évaporateur (2) et en amont du compresseur (4).

6. Circuit de fluide frigorigène selon l'une quelconque des revendications 1 à 5, **caractérisé en ce qu'**une dérivation (15) comprenant une soupape réglable est disposée parallèlement au détendeur (7).

7. Circuit de fluide frigorigène selon l'une quelconque des revendications 1 à 6, **caractérisé en ce qu'**un accumulateur de froid (12) est disposé entre l'évaporateur (2) et un collecteur de fluide frigorigène (8').

8. Circuit de fluide frigorigène selon l'une quelconque des revendications 1 à 7, **caractérisé en ce qu'**un séparateur de phases (16) est disposé entre le détendeur (7) et l'évaporateur (2).

9. Circuit de fluide frigorigène selon l'une quelconque des revendications 1 à 8, **caractérisé en ce que** l'évaporateur (2) est configuré en deux parties ou plus, où du fluide frigorigène liquide (3f) peut être fourni au premier segment (2'), du fluide frigorigène gazeux et / ou liquide (3g ou 3f) pouvant être fourni au deuxième segment (2") ou bien aux segments suivants.

10. Circuit de fluide frigorigène selon l'une quelconque des revendications 1 à 8, **caractérisé en ce que** l'évaporateur (2) est configuré en deux parties ou plus, où il est prévu une dérivation entre l'entrée de l'évaporateur (2), et le deuxième segment (2") de l'évaporateur (2).

11. Circuit de fluide frigorigène selon la revendication 10, **caractérisé en ce qu'**une soupape d'arrêt (18) est disposée dans la dérivation.

12. Circuit de fluide frigorigène selon l'une quelconque des revendications 1 à 11, **caractérisé en ce qu'**un échangeur de chaleur intérieur (19) est disposé dans le circuit de fluide frigorigène (5).

13. Circuit de fluide frigorigène selon la revendication 12, **caractérisé en ce qu'**il existe une conduite allant du condenseur (6) jusqu'au premier segment (2') de l'évaporateur (2) en plusieurs parties, via l'échangeur de chaleur intérieur (19) et via un deuxième détendeur (7'), et il existe une conduite allant du condenseur (6) jusqu'au deuxième ou à un autre segment (2") de l'évaporateur (2) en plusieurs parties, via le détendeur (7), où le premier segment (2') de l'évaporateur (2) sert de collecteur de fluide frigorigène (8).

14. Circuit de fluide frigorigène selon la revendication 13, **caractérisé en ce que** l'échangeur de chaleur intérieur (19) et le deuxième détendeur (7') sont disposés dans un bac collecteur (20) de l'évaporateur (2).

15. Circuit de fluide frigorigène selon l'une quelconque des revendications 1 à 14, **caractérisé en ce que** le dispositif (10) de diminution de la pression est disposé entre le détendeur (7) et le compresseur (4).

16. Système de climatisation **caractérisé par** un circuit de fluide frigorigène (5) selon l'une quelconque des revendications 1 à 15.

17. Procédé de fonctionnement d'un système de climatisation (1) selon la revendication 16 où, lorsque le ralenti est coupé, du fluide frigorigène (3) d'un circuit de fluide frigorigène (5) est collecté dans au moins un collecteur de fluide frigorigène (8, 8') qui sert de dispositif (10) de diminution de la pression.

18. Procédé selon la revendication 17, **caractérisé en ce que**, dans le cas d'un évaporateur (2) en plusieurs parties comprenant au moins deux segments (2', 2") servant à la charge, au moins le segment (2') n'est pas traversé par le flux d'air, segment dans lequel est accumulé du fluide frigorigène liquide (3f).

19. Procédé selon la revendication 17 ou 18, **caractérisé en ce que**, dans le cas d'un évaporateur (2) en plusieurs parties comprenant au moins deux segments (2', 2") servant à la décharge, le premier segment (2') est traversé par le flux d'air lorsque le ralenti est coupé.

20. Procédé selon l'une quelconque des revendications 17 à 19, **caractérisé en ce que**, dans le cas d'un évaporateur (2) en plusieurs parties comprenant au moins deux segments (2', 2"), tous les segments (2', 2") sont traversés par le flux d'air au cours du fonctionnement en mode refroidissement.
